# EUROPÄISCHE PATENTSCHRIFT

(11) **EP 3 381 328 B1**
(45) Veröffentlichungstag und Bekanntmachung des Hinweises auf die Patenterteilung: **08.03.2023**
(21) Anmeldenummer: 18161726.7
(22) Anmeldetag: 14.03.2018
(51) Int. Cl.: A47B 96/16, G07F 11/60

(54) **STÜCKGUTKASTEN UND VERFAHREN ZUR ÜBERGABE UND LAGERUNG VON STÜCKGUT IN EINEM STÜCKGUTKASTEN**
PACKAGE BOX AND METHOD FOR TRANSFERRING AND STORING PACKAGES IN A PACKAGE BOX
CAISSE POUR MARCHANDISE DE DÉTAIL ET PROCÉDÉ DE LIVRAISON ET DE STOCKAGE DES MARCHANDISE DE DÉTAIL DANS UNE CAISSE POUR MARCHANDISE DE DÉTAIL

(30) Priorität: 28.03.2017 DE 102017106602
(43) Veröffentlichungstag der Anmeldung: 03.10.2018
(73) Patentinhaber: StreetScooter GmbH, 52070 Aachen (DE)
(72) Erfinder: Orth, Felix, 52066 Aachen (DE); Voiges, Daniel, 52066 Aachen (DE); Schmitt, Fabian, 4731 Eynatten (BE)
(74) Vertreter: Cohausz & Florack

(56) Entgegenhaltungen:
- WO-A1-92/20259
- DE-A1- 4 335 742
- GB-A- 725 757
- US-A- 838 194
- US-A- 1 050 252
- US-A- 1 220 251
- US-A- 5 802 991
- US-A1- 2017 024 687
- US-B1- 6 789 860
- US-B1- 7 210 616

## Beschreibung

Die Erfindung betrifft einen Stückgutkasten, mit wenigstens einer Stückgutkammer zur Aufnahme wenigstens eines Stückguts, wobei der wenigstens einen Stückgutkammer wenigstens ein von einer Lagerstellung zum Lagern des wenigstens einen Stückguts in der Stückgutkammer in eine wenigstens teilweise außerhalb der Stückgutkammer angeordnete Übergabestellung zum Übergeben des Stückguts von dem Stückgutkasten und/oder an den Stückgutkasten verstellbarer Halter zugeordnet ist und wobei der Halter wenigstens in der Übergabestellung zwei, insbesondere seitliche, Haltebereiche zum wenigstens indirekten Halten des wenigstens einen Stückguts wenigstens in der Übergabestellung aufweist. Ferner betrifft die Erfindung ein Verfahren zur Übergabe und Lagerung von Stückgut in einem solchen Stückgutkasten.

Stückgutkästen mit wenigstens einer Stückgutkammer zur Aufnahme wenigstens eines Stückguts sind bereits in unterschiedlichen Ausgestaltungen bekannt. Um ein Stückgut in eine Stückgutkammer eines Stückgutkastens einzulegen oder um ein Stückgut aus einer Stückgutkammer eines Stückgutkastens zu entnehmen, wird die entsprechende Stückgutkammer von einem Benutzer geöffnet, der anschließend händisch ein Stückgut in die Stückgutkammer einlegt oder aus der Stückgutkammer herausnimmt.

In Einzelfällen sind auch Stückgutkästen mit Schubladen bekannt, die in eine Stückgutkammer eingeschoben oder aus einer Stückgutkammer herausgezogen werden und so als Halter genutzt werden können. In den Stückgutkasten eingeschoben befinden sich die Schubladen in einer Lagerstellung, in der das Stückgut in den Schubladen gelagert werden kann. Aus dem Stückgutkasten ausgezogen befinden sich die Schubladen in einer Übergabestellung, die es dem Benutzer erlaubt, das Stückgut in die Schubladen einzulegen oder aus den Schubladen zu entnehmen. Der sich über die gesamte Breite der Schuladen erstreckende Boden derselben bildet einen Haltebereich, der die Stückgüter direkt oder indirekt halten kann, je nachdem ob das Stückgut einzeln oder auf einem Träger in die Schublade eingelegt wird.

Ein gattungsgemäßer Stückgutkasten ist aus der US 7 210 616 B1 bekannt. Weitere Stückgutkästen sind aus der US 838 194 A, der US 210 251 A, der US 1 050 252 A, der US 2017/0024687 A1, der US6789860B und der US 5 802 991 A bekannt. In diesem Zusammenhang gibt es Bestrebungen, das Stückguthandling effizienter und kostengünstiger zu gestalten. Ein nennenswerter Kostenfaktor stellen hier wie in anderen Bereichen die Personalkosten dar. Diese können aber nicht oder nicht ohne Weiteres gesenkt werden. Dazu wäre es notwendig, das Personal von Tätigkeiten zu entlasten. Allerdings kann auf bestimmte Tätigkeiten kaum verzichtet werden. Es ist bisher auch nicht gelungen, bestimmte Tätigkeiten von Maschinen anstelle von Personal durchführen zu lassen. Der damit einhergehende technische Aufwand ist nämlich derart immens, dass die Effizienz des Stückguthandlings insgesamt nicht oder nicht nennenswert gesteigert werden kann, wenn gleichzeitig keine nennenswerten Abstriche hinsichtlich der Zuverlässigkeit und Schnelligkeit in Kauf genommen werden sollen. Daher liegt der vorliegenden Erfindung die Aufgabe zugrunde, den Stückgutkasten und das Verfahren jeweils der eingangs genannten und zuvor näher erläuterten Art derart auszugestalten und weiterzubilden, dass das Handling von Stückgut zum Einlegen, Zwischenlagern und Entnehmen von Stückgut in Stückgutkammern von Stückgutkästen effizienter und kostengünstiger durchgeführt werden kann.

Diese Aufgabe ist durch einen Stückgutkasten nach Anspruch 1 gelöst.

Die genannte Aufgabe ist zudem durch ein Verfahren nach Anspruch 8 gelöst.

Durch die Ausgestaltung des Halters mit wenigstens zwei Haltebereichen, zwischen denen sich ein außerhalb der Stückgutkammer angeordneter Freiraum befindet, kann das Übergeben und/oder das Übernehmen von Stückgut an die Stückgutkammer und/oder von der Stückgutkammer maschinell erfolgen. Es ist also hierfür nicht mehr zwingend eine Bedienperson erforderlich. Die maschinelle Übergabe und/oder Übernahme von Stückgut kann mittels einer Übergabeeinrichtung erfolgen, die beim Übergeben oder Übernehmen des Stückguts durch den Freiraum bewegt werden kann. Dabei ist die Übergabeeinrichtung vorzugsweise ähnlich eines Arms ausgebildet, der Stückgut direkt oder indirekt tragen kann. Wenn die Übergabeeinrichtung das Stückgut direkt trägt, dann liegt das Stückgut beispielsweise auf der Übergabeeinrichtung auf, während die Übergabeeinrichtung das Stückgut nur indirekt trägt, wenn die Übergabeeinrichtung ein Tablett oder einen Behälter trägt, auf dem bzw. in dem das Stückgut platziert ist.

Wird beispielsweise von dem Halter ein Stückgut, ein Tablett oder ein Behälter gehalten, kann die Übergabeeinrichtung die Sendung, das Tablett oder den Behälter vom Halter nehmen, um die Sendung beispielsweise in ein Fahrzeug zu transportieren und dort zwischenzulagern. In diesem Fall wird es bevorzugt sein, wenn die Übergabeeinrichtung von unten nach oben durch den Freiraum zwischen den Haltebereichen bewegt, insbesondere geschwenkt, wird. Die Sendung, das Tablett oder der Behälter kann dann bedarfsweise formschlüssig, insbesondere in Richtung der Schwerkraft von der Übergabeeinrichtung übernommen werden, etwa um die Sendung, das Tablett oder den Behälter an ein Fahrzeug zu übergeben. Die Sendung lässt sich so beispielweise in der Stückgutkammer lagern, bis ein Fahrzeug kommt und die Sendung übernimmt sowie anschließend mitnimmt. Die Sendung kann dann in gewünschter Weise an einem anderen Ort zugestellt werden.

Es kann aber auch vorgesehen sein, dass ein Stückgut, das bedarfsweise von einem Fahrzeug herangeführt wird, an die Stückgutkammer übergeben und dabei bedarfsweise auch zugestellt wird. Dann wird die Übergabeeinrichtung ein Stückgut, ein Tablett oder einen Behälter halten und insbesondere von oben nach unten durch den Freiraum zwischen den Haltebereichen des Halters bewegt werden. Auf diese Weise entsteht ein Formschluss wenigstens in der Schwerkraftrichtung zwischen der Sendung, dem Tablett oder dem Behälter, so dass selbiger von der Übergabeeinrichtung abgehoben wird. Mit anderen Worten kann die Übergabeeinrichtung nach unten durch den Freiraum hindurchgezogen werden und dabei die Sendung mit oder ohne Tablett oder Behälter zurücklassen.

Um das Handling von Stückgut weiter zu vereinfachen, kann die Übergabeeinrichtung an einem Fahrzeug montiert sein. Die Übergabeeinrichtung wird dann ebenso wie die übernommenen und/oder die zu übergebenden Stückgüter mit dem Fahrzeug mitgeführt. Unabhängig davon kann die Übergabeeinrichtung auch von dem Fahrzeug aus betätigt werden, sei es manuell oder automatisiert. So ist es beispielsweise nicht mehr erforderlich, dass eine Bedienperson aus dem Fahrzeug aussteigt und das Stückgut händisch in den Stückgutkasten einlegt und/oder händisch aus dem Stückgutkasten entnimmt. Dies kann beispielsweise vom Fahrer des Fahrzeugs unter Zuhilfenahme der Übergabeeinrichtung bewerkstelligt werden, ohne dass der Fahrer das Fahrzeug dabei verlassen muss.

Der Begriff Fahrzeug kann vorliegend sehr breit verstanden werden. Es sind zwar der Einfachheit halber vorzugsweise motorisch angetriebene Fahrzeuge gemeint, allerdings kommen auch nicht motorisch angetriebene Fahrzeuge in Frage, die beispielsweise händisch oder durch ein anderes motorisch angetriebenes Fahrzeug verfahren werden. Insbesondere im Falle von motorisch angetriebenen Fahrzeugen, können diese von einem Fahrer gefahren bzw. gesteuert werden. Es kann sich aber auch um ganz oder teilweise autonom fahrende Fahrzeuge handeln, die ganz oder teilweise auf einen Fahrer verzichten können. In diesem Falle bieten sich beispielsweise sogenannte Landdrohnen an, bei denen es sich um unbemannte autonom über Land fahrende Fahrzeuge handelt. Diese können sehr viel kleiner als bemannte Landfahrzeuge sein, wobei dies jedoch nicht erforderlich ist.

Unter Stückgut werden vorliegend grundsätzlich Gegenstände verstanden, die sich am Stück, und zwar insbesondere mit überschaubarem Aufwand, transportieren lassen. Es handelt sich beim Stückgut also vorzugsweise um einzelne Gegenstände. Unter einem Stückgut kann aber auch ein Gebinde, beispielsweise eine Kiste, eine beladene Palette, eine Rolle oder ein Fass verstanden werden. Ein Behälter, der Schüttgut, Flüssiggut oder Gas aufweist, ist ebenfalls Stückgut. Des Weiteren kann ein Stückgut ebenso ein bestimmtes Gut oder Gebinde wie auch ein umverpacktes Gut oder Gebinde sein. Umverpackte Güter bzw. Stückgüter werden dabei auch als Packstücke bezeichnet.

Typischerweise bestehen hinsichtlich der Größe und des Gewichts von Stückgütern dort Obergrenzen, wo sich infolge der Größe und/oder des Gewichts des Stückguts das Stückgut nicht mehr ohne Weiteres transportieren lässt. Vorliegend kann es sich insbesondere um Stückgüter handeln, dessen maximale Abmessung kleiner als 3 m, vorzugsweise kleiner als 2 m, insbesondere kleiner als 1 m und/oder dessen maximales Volumen kleiner 2 m³, vorzugsweise kleiner 1 m³, insbesondere kleiner 0,5 m³, ist. Des Weiteren kann eine Obergrenze des Gewichts bei 100 kg, vorzugsweise bei 10 kg, insbesondere bei 1 kg liegen.

Die Stückguter können beispielsweise Gegenstände des täglichen Bedarfs, wie Verbrauchsmaterialien oder Lebensmittel oder technische Gegenstände und Gerätschaften sein. Ferner können Stückguter auch Sendungen sein, die typischerweise an bestimmten Orten an bestimmte Adressaten übergeben, für bestimmte Adressaten hinterlegt oder an bestimmte Adressaten zugestellt werden. Regelmäßig werden Sendungen vorzugsweise kleinere und leichtere Stückgüter darstellen. Sendungen können so beispielsweise mit einem Paketdienst, einem Expressdienst oder einem Kurierdienst verteilt werden. Zudem handelt es sich bei Sendungen oftmals um Packstücke, also verpackte Stückgüter. Dabei handelt es sich bei den Sendungen vorzugsweise um Briefsendungen, Paketsendungen und/oder Printprodukte. Dabei umfassen Paketsendungen auch Päckchen, während Printprodukte auch Prospekte, Broschüren und Zeitschriften sein können. Neben Briefen zählen auch Postkarten zu den Briefsendungen.

Vor diesem Hintergrund handelt es sich bei dem Stückgutkasten zur Übergabe und Lagerung von Stückgut, vorzugsweise um einen Sendungskasten zur Übergabe und Lagerung von Sendungen. Ein solcher Sendungskasten weist zudem vorzugsweise Sendungskammern zur Aufnahme wenigstens einer Sendung auf. Mithin kann die Erfindung ihre Vorteile insbesondere im Zusammenhang mit dem Sendungshandling ausspielen, wobei vorliegend Sendungen als mögliche Arten von Stückgut verstanden werden können. In vielen Fällen handelt es sich bei den Sendungen um von einem Postunternehmen zuzustellende Sendungen, die als Postsendungen bezeichnet werden können. Alternativ oder zusätzlich kann das Sendungshandling auch von wenigstens einem Paketdienst, Expressdienst oder Kurierdienst erfolgen. Bedarfsweise handelt es sich bei den Sendungen um Briefsendungen, Paketsendungen und/oder Printprodukte. Dabei umfassen Paketsendungen auch Päckchen, während Printprodukte auch Prospekte, Broschüren und Zeitschriften sein können. Zudem kann eine Briefsendung neben einem Brief auch eine Postkarte sein.

Der besseren Verständlichkeit halber und zur Vermeidung unnötiger Wiederholungen werden nachfolgend der Stückgutkasten und das Verfahren jeweils der eingangs genannten Art gemeinsam erläutert, ohne dabei jeweils im Einzelnen zwischen dem Stückgutkasten und dem Verfahren zu unterscheiden. Dem Fachmann ist jedoch jeweils anhand des Kontextes ersichtlich, welches Merkmal jeweils hinsichtlich des Stückgutkastens und des Verfahrens bevorzugt ist.

Bei einer ersten besonders bevorzugten Ausgestaltung des Stückgutkastens ist der wenigstens eine Freiraum an einer Vorderseite des Stückgutkastens vorgesehen. So wird das wenigstens teilweise Hindurchgreifen des Freiraums durch die Übergabeeinrichtung erleichtert, und zwar insbesondere, wenn die Übergabeeinrichtung an einem Fahrzeug montiert ist. Das wenigstens eine Stückgut kann zudem einfach von der Vorderseite des Stückgutkastens aus der Stückgutkammer entnommen werden bzw. in die Stückgutkammer eingelegt werden. Alternativ, insbesondere aber zusätzlich, kann zudem vorgesehen sein, dass der Freiraum von einem Raum angrenzend zur Vorderseite des Stückgutkastens in horizontaler Richtung zugänglich ist. Dies vereinfacht das wenigstens teilweise Hindurchbewegen der Übergabeeinrichtung durch den Freiraum, und zwar insbesondere in der Weise, dass sich die bedarfsweise an einem Fahrzeug montierte Übergabeeinrichtung wenigstens im Wesentlichen vertikal durch den Freiraum bewegen kann, sei es von unten nach oben oder von oben nach unten. Die entsprechende Bewegung der Übergabeeinrichtung durch den Freiraum kann zudem besonders einfach als eine Schwenkbewegung realisiert werden. Dann kann es ausreichen, wenn der durch den Freiraum geschwenkte Teil der Übergabeeinrichtung um wenigstens eine Schwenkachse geschwenkt wird. Besonders einfach ist dies zudem, wenn die wenigstens eine Schwenkachse wenigstens im Wesentlichen horizontal ausgerichtet ist.

Alternativ oder zusätzlich lässt sich der Halter konstruktiv einfach bereitstellen und zudem leicht handhaben, wenn der Halter wenigstens in der Übergabestellung wenigstens im Wesentlichen U-förmig ausgebildet ist. Auf diese Weise lässt sich auch der Freiraum zwischen den Haltebereichen ohne Weiteres realisieren. Als Haltebereiche können beispielsweise die äußeren Schenkel des U-förmigen Halters genutzt werden. Es handelt sich dann je nach der Ausrichtung des Halters insbesondere um seitliche Haltebereiche des Halters. Es kann alternativ oder zusätzlich auch der die äußeren Schenkel des U-förmigen Halters verbindende Quersteg des Halters als Haltebereich genutzt werden. Dieser Haltebereich kann dann zudem insbesondere einen hinteren Haltebereich bilden. Jeder dieser Haltebereiche kann dann dem sicheren Halten der wenigstens einen Sendung, dem Tablett und/oder dem Behälter dienen.

Wenn der Halter über wenigstens ein Schienensystem von der Lagerstellung in die Übergabestellung und/oder von der Übergabestellung in die Lagerstellung verschiebbar mit dem Stückgutkasten verbunden ist, lässt sich die entsprechende Verstellung des Halters sehr einfach und recht verschleißarm realisieren. Zudem ist diese Ausgestaltung aus konstruktiver und Kostensicht bevorzugt. Bei Nutzung eines Schienensystems, aber nicht nur dann, kann der Halter von der Lagerstellung in die Übergabestellung und/oder von der Übergabestellung in die Lagerstellung wenigstens im Wesentlichen horizontal verschiebbar vorgesehen sein, wodurch ein zuverlässiges und platzsparendes Verstellen des Halters beim Übergeben und/oder Übernehmen von Stückgut sichergestellt werden kann.

Um die Übergabe wenigstens einer Sendung von der Übergabeeinrichtung an den Halter und/oder von dem Halter an die Übergabeeinrichtung zu vereinfachen und zugleich zuverlässig durchführen zu können, kann der Halter wenigstens in der Übergabestellung wenigstens im Wesentlichen horizontal ausgerichtet sein. Die Zuverlässigkeit der Übergabe und ein Ausgleich von moderaten Ausrichtungsabweichungen zwischen dem Halter und der Übergabeeinrichtung kann grundsätzlich verbessert werden, wenn der Halter, insbesondere wenigstens ein Haltebereich wenigstens eine zum Freiraum hin abfallende Abschrägung aufweist. Die Sendung, das Tablett und/oder der Behälter kann dann bei der Übergabe an den Halter an der wenigstens einen Abschrägung abrutschen und so in gewünschter Weise positioniert, bedarfsweise auch zentriert, werden.

Damit die Sendung, das Tablett und/oder der Behälter eine breitere Auflagefläche auf der Halterung aufweisen, etwa um ein unerwünschtes Verbiegen der Sendung, des Tabletts und/oder des Behälters zu vermeiden, kann zwischen dem Freiraum und der wenigstens einen Abschrägung sowie unterhalb der wenigstens einen Abschrägung eine Tragstruktur zum Tragen der wenigstens einen Sendung vorgesehen sein. Die Tragstruktur weist dabei zur Vergrößerung der Auflagefläche vorzugsweise eine ebene, insbesondere wenigstens im Wesentlichen horizontale, Auflagefläche auf.

Die Übergabe und/oder die Übernahme von Stückgut wird im Übrigen vereinfacht, wenn das wenigstens eine Stückgut von wenigstens einem Tablett und/oder Behälter und das wenigstens eine Tablett und/oder der wenigstens eine Behälter in Schwerkraftrichtung formschlüssig vom Halter getragen ist. Dabei kann hinzukommen, dass das Tablett und/oder der Behälter dabei auf der wenigstens einen Abschrägung aufliegt. Jedenfalls können durch die Verwendung eines Tabletts und/oder eines Behälters für das Stückguthandling Stückgut mit sehr unterschiedlichen Abmessungen übergeben und/oder übernommen werden. Eine wenigstens übermäßige Standardisierung des Stückguts ist dann nicht erforderlich. Gleichwohl kann es aber zweckmäßig sein, die Tabletts und/oder die Behälter zu standardisieren, die zusammen mit bestimmten Haltern verwendet werden sollen.

Um bei der Übernahme und/oder Übergabe von Stückgut keine unnötigen Verfahrensschritte durchführen zu müssen, kann es zweckmäßig sein, wenn das Tablett und/oder der Behälter lösbar mit dem Halter, insbesondere der Abschrägung und/oder der Tragstruktur, verbunden ist. Eine dauerhafte Verbindung muss dann nicht gefügt werden. Eine formschlüssige Verbindung beispielsweise in Schwerkraftrichtung kann dann genügen. Bedarfsweise kann die Sendung, das Tablett und/oder der Behälter alternativ oder zusätzlich in wenigstens einer horizontalen Richtung formschlüssig mit dem Halter, insbesondere der Abschrägung und/oder der Tragstruktur, verbunden sein. Dann kann beispielsweise vermieden werden, dass die Sendung, das Tablett und/oder der Behälter versehentlich vom Halter rutscht.

Um einen unautorisierten Zugriff auf ein Stückgut in einer Stückgutkammer zu vermeiden, weist die wenigstens eine Stückgutkammer in der Lagerstellung des wenigstens einen Halters eine durch eine Klappe verschlossene Zugangsöffnung auf. Zusätzlich gibt die Klappe in der Übergabestellung die Zugangsöffnung frei. So kann die Sendung beispielsweise einfach aus der Stückgutkammer entnommen oder einfach in die Stückgutkammer eingelegt werden. Des Weiteren ist die Interaktion mit dem Halter zum Austausch von Stückgut zwischen dem Halter und einer Übergabeeinrichtung vereinfacht, da der wenigstens eine Halter wenigstens teilweise durch die Zugangsöffnung hindurch verschiebbar ist. Beispielsweise kann der Halter dann wenigstens teilweise durch die Zugangsöffnung nach außerhalb der Stückgutkammer verschoben werden. Zum sicheren Lagern der wenigstens einen Sendung kann der Halter dann wieder teilweise durch die Zugangsöffnung ganz in die Stückgutkammer verstellt, bedarfsweise verschoben, werden.

Da die wenigstens eine Klappe schwenkbar am Stückgutkasten gehalten und mit dem wenigstens einen Halter schwenkbar verbunden ist, können das Öffnen der Zugangsöffnung und das Verstellen des Halters von der Lagerstellung in die Übergabestellung und/oder zurück gekoppelt werden, und zwar gegebenenfalls zwangsweise. Die wenigstens eine Klappe kann beispielsweise auf diese Art durch das Verstellen des wenigstens einen Halters von der Lagerstellung in die Übernahmestellung von der geschlossenen Stellung in die geöffnete Stellung verstellt werden und umgekehrt. Es bedarf dann lediglich des Verstellens des Halters oder der Klappe, um sowohl die Klappe als auch den Halter zu verstellen. Alternativ oder zusätzlich kann natürlich vorgesehen sein, dass das Verstellen des wenigstens einen Halters von der Übernahmestellung in die Lagerstellung das Verstellen der wenigstens einen Klappe von der geöffneten Stellung in die geschlossene Stellung bewirkt und umgekehrt. Dabei ist das Verstellen der wenigstens einen Klappe ganz grundsätzlich dann konstruktiv einfach zu realisieren, wenn die Klappe schwenkbar am Stückgutkasten gehalten ist.

Unabhängig von einer etwaigen Kopplung von Halter und Klappe kann es zweckmäßig sein, wenn dem wenigstens einen Halter und/oder dem wenigstens einen Schienensystem ein Antrieb zugeordnet ist, um den Halter von der Lagerstellung in die Übergabestellung und/oder von der Übergabestellung in die Lagerstellung zu verstellen. Um Platz zu sparen und eine definierte und zuverlässige Verstellung sicherstellen zu können, bietet sich in diesem Zusammenhang die Verwendung wenigstens eines Spindelantriebs oder eines Linearantriebs an. Alternativ oder zusätzlich kann der wenigstens einen Klappe ein Antrieb, insbesondere Spindelantrieb, zum Verstellen der wenigstens einen Klappe von der geschlossenen Stellung in die geöffnete Stellung und/oder von der geöffneten Stellung in die geschlossene Stellung zugeordnet sein. Dabei werden grundsätzlich dieselben Vorteile realisiert.

Verfahrensmäßig ist es so, dass mit dem Verstellen des Halters von der Lagerstellung in die Übergabestellung zwangsweise wenigstens eine Klappe von einer eine Zugangsöffnung der Stückgutkammer verschließenden geschlossenen Stellung in eine die Zugangsöffnung freigebende offene Stellung geschwenkt wird. Dabei stellt das Schwenken der Klappe eine einfache und zuverlässig realisierbare Verstellung dar. Zusätzlich wird mit dem Verstellen des Halters von der Übergabestellung in die Lagerstellung zwangsweise wenigstens eine Klappe von einer die Zugangsöffnung der Stückgutkammer freigebenden geöffneten Stellung in eine die Zugangsöffnung verschließende geschlossene Stellung geschwenkt. So wird ein konstruktiv einfacher und zuverlässiger Betrieb des Stückgutkastens möglich.

Besonders komfortabel wird das Handling des Stückguts, wenn der wenigstens eine Halter über einen Antrieb zum Verstellen des Halters von der Lagerstellung in die Übergabestellung und/oder von der Übergabestellung in die Lagerstellung angetrieben wird. Eine beispielsweise händische Betätigung des Halters ist somit bedarfsweise entbehrlich. Alternativ oder zusätzlich kann aber auch die wenigstens eine Klappe über einen Antrieb zum Verstellen der Klappe von der geschlossenen Stellung in die geöffnete Stellung und/oder von der geöffneten Stellung in die geschlossene Stellung angetrieben werden, was zu denselben Vorteilen führt.

Das Verstellen des Halters lässt sich verfahrensmäßig problemlos bewerkstelligen, wenn der wenigstens eine Halter über ein Schienensystem von der Lagerstellung in die Übergabestellung ausgezogen beziehungsweise in umgekehrter Richtung eingeschoben wird. Dabei wird das Ausziehen für eine bessere Übergabe des Stückguts vorzugsweise wenigstens teilweise aus der Stückgutkammer oder dem Stückgutkasten erfolgen. In die entgegengesetzte Richtung wird dann der Halter vorzugsweise wenigstens teilweise in die Stückgutkammer oder den Stückgutkasten eingeschoben. Um durch die Verstellung des Halters zudem eine zuverlässige Verstellung der wenigstens einen Sendung sicherzustellen, bietet es sich an, wenn das Verstellen des Halters in die Lagerstellung und/oder in die Übergabestellung wenigstens im Wesentlichen horizontal erfolgt.

Um Stückgut mit recht unterschiedlichen Abmessungen leicht handhaben zu können, kann das wenigstens eine Stückgut, wenigstens ein wenigstens ein Stückgut tragendes Tablett und/oder wenigstens einen wenigstens ein Stückgut aufweisenden Behälter von der wenigstens einen Übergabeeinrichtung an den wenigstens einen Halter übergeben sowie alternativ oder zusätzlich von der wenigstens einen Übergabeeinrichtung vom wenigstens einen Halter übernommen werden. Dabei erlaubt insbesondere die Verwendung von wenigstens einem Tablett und/oder wenigstens einem Behälter das einfache Handling von Stückgut mit recht unterschiedlichen Abmessungen. Primär kann dann das Tablett und/oder der Behälter gehandhabt werden, das/der wenigstens ein Stückgut tragen bzw. aufweisen kann.

Verfahrensmäßig kann vorgesehen sein, dass das wenigstens eine Stückgut, wenigstens ein wenigstens ein Stückgut tragendes Tablett und/oder wenigstens ein wenigstens ein Stückgut aufweisender Behälter von der wenigstens einen Übergabeeinrichtung auf wenigstens einer Abschrägung des Halters abgestellt wird. Die Sendung, das Tablett oder der Behälter können dann wenigstens teilweise an den Abschrägungen abrutschen, wodurch die Sendung, das Tablett und/oder der Behälter positioniert und/oder zentriert werden kann. Auf diese Weise lassen sich beispielsweise Ungenauigkeiten in der Ausrichtung von Halter und Übergabeeinrichtung ausgleichen. Bedarfsweise wird dies dadurch erreicht, dass das wenigstens eine Stückgut, wenigstens ein wenigstens ein Stückgut tragendes Tablett und/oder wenigstens ein wenigstens ein Stückgut aufweisender Behälter wenigstens teilweise selbständig an der wenigstens einen Abschrägung abrutscht.

Nachträglich wird die Erfindung anhand einer lediglich ein Ausführungsbeispiel darstellenden Zeichnung näher erläutert. In der Zeichnung zeigt
- Fig. 1A-C: einen erfindungsgemäßen Stückgutkasten in verschiedenen Stellungen bei der Durchführung des erfindungsgemäßen Verfahrens schematisch in perspektivischen Ansichten und von der Seite,
- Fig. 2A-D: ein Detail des Stückgutkastens aus Fig. 1 in verschiedenen Stellungen bei der Durchführung des erfindungsgemäßen Verfahrens schematisch in perspektivischen Ansichten und von der Seite,
- Fig. 3A-C: das Detail des Stückgutkastens aus Fig. 2 in verschiedenen Stellungen bei der Durchführung des erfindungsgemäßen Verfahrens unter Verwendung eines Tabletts schematisch in perspektivischen Ansichten und von der Seite,

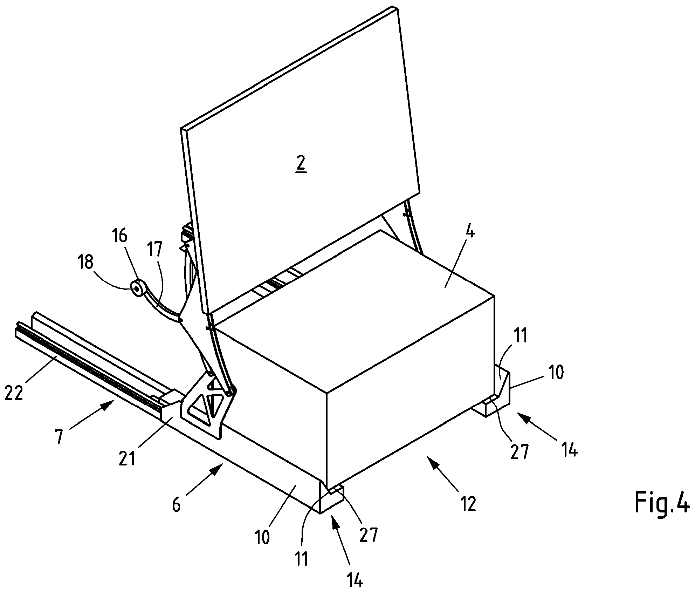

- Fig. 4: das Detail des Stückgutkastens aus Fig. 2 in einer perspektivischen Darstellung in einer Position während der Durchführung des erfindungsgemäßen Verfahrens unter Verzicht auf ein Tablett und einen Behälter in einer perspektivischen Ansicht.

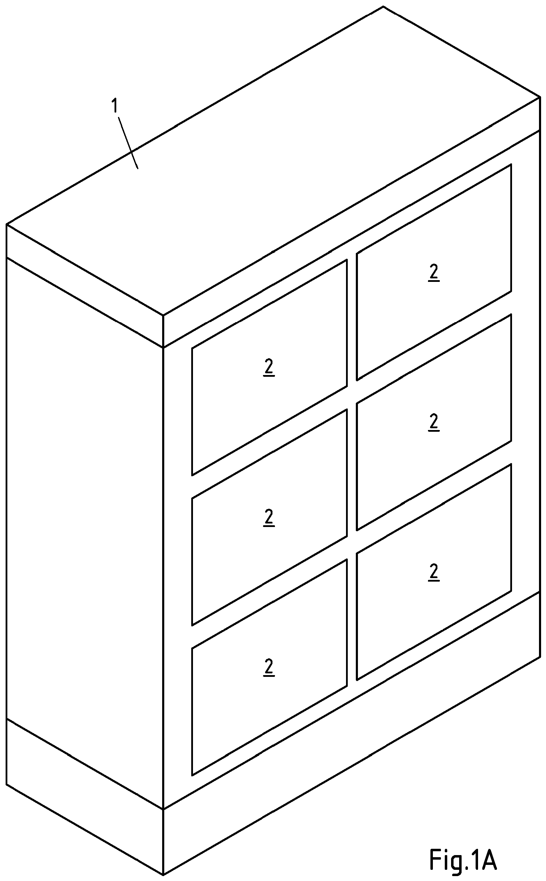

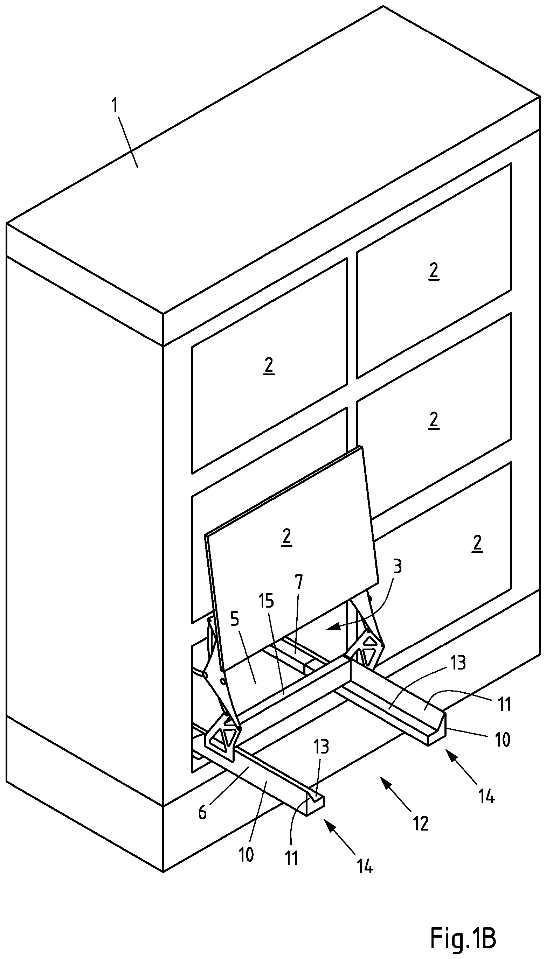

In den Fig. 1A-C ist ein Stückgutkasten 1, vorzugsweise in Form eines Sendungskastens, in unterschiedlichen Stellungen mit einer Reihe von Klappen 2 dargestellt, hinter denen jeweils eine Stückgutkammer 3, insbesondere in Form einer Sendungskammer, zur Aufnahme und zeitweisen Lagerung von wenigstens einem Stückgut 4, insbesondere in Form von wenigstens einer Sendung, angeordnet ist. Um ein Stückgut 4 in eine Stückgutkammer 3 einlegen oder aus einer Stückgutkammer 3 entnehmen zu können, können die Klappen 2 aus der in der Fig. 1A dargestellten geschlossenen Stellung in eine geöffnete Stellung verstellt werden, die für eine der Klappen 2 in der Fig. 1B dargestellt ist. In der geschlossenen Stellung einer Klappe 2 verschließt die Klappe 2 eine Zugangsöffnung 5, die den Zugang zu der zugehörigen Stückgutkammer 3 ermöglicht. In der geöffneten Stellung der Klappe 2 gibt die Klappe 2 die Zugangsöffnung 5 und damit den Zugang zur zugehörigen Stückgutkammer 3 frei.

In der in der Fig. 1 B dargestellten geöffneten Stellung der einen Klappe 2 ist zudem ein Halter 6 der zugehörigen Stückgutkammer 3 in einer Übergabestellung wenigstens teilweise außerhalb der Stückgutkammer 3 angeordnet, der in der geschlossenen Stellung der Klappe 2 in einer Lagerstellung im Stückgutkasten 1 angeordnet ist. Der Halter 6 ist dabei über ein Schienensystem 7 mit dem Stückgutkasten 1 verbunden, über das der Halter 6 zwischen der Lagerstellung und der Übergabestellung sowie in umgekehrter Richtung verstellt werden kann. Das Verstellen des Halters 6 wird infolge des länglichen Schienensystems 7 in Form eines Verschiebens des Halters 6 bewirkt.

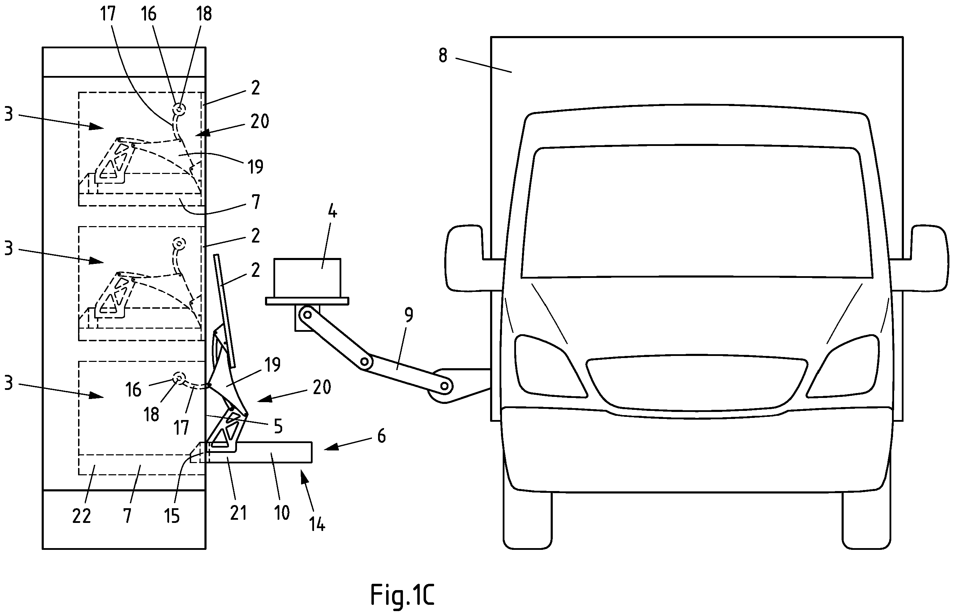

In der Fig. 1C ist schematisch die Übergabe wenigstens eines Stückguts 4 an den wenigstens einen Halter 6 in der Übergabestellung dargestellt. Die Übergabe erfolgt beim dargestellten und insoweit bevorzugten Verfahren mit Hilfe eines Fahrzeugs 8, das neben dem Stückgutkasten 1 parkt und mittels einer Übergabeeinrichtung 9, die beim dargestellten und insoweit bevorzugten Fahrzeug 8 in Form eines Arms ausgebildet ist. Das übergebene Stückgut 4 kann nach dem Übergeben über den Halter 6 in die zugehörige Stückgutkammer 3 geschoben und die Klappe 2 geschlossen werden, um das Stückgut 4 zeitweise in der Stückgutkammer 3 zu lagern und später wieder aus der Stückgutkammer 3 abzugeben. Das Fahrzeug kann von einem Fahrer oder wenigstens teilweise autonom gefahren werden. Bedarfsweise kann es sich auch um ein unbemanntes Fahrzeug, etwa im Sinne einer Landdrohe, handeln.

Da die Ausrichtung des Fahrzeugs 8 gegenüber dem Stückgutkasten 1 insbesondere dem jeweiligen Halter 6 einer Stückgutkammer 3 nur mit einer gewissen Ungenauigkeit erfolgen kann, weist der Halter 6, wie insbesondere in der Fig. 1B dargestellt ist, an seitlichen Haltebereichen 10 Abschrägungen 11 auf, die dem Positionieren und bedarfsweise Zentrieren der Sendung 4 auf dem Halter 6 bei der Übergabe des Stückguts 4 an den Halter 6 dienen. An die Abschrägungen 11 schließen sich in Richtung eines Freiraums 12 zwischen den Haltebereichen 10 Tragstrukturen 13 zum Tragen des wenigstens einen Stückguts 4 bzw. zum Bereitstellen von einer ausreichenden Auflagefläche an. Insgesamt ist der Halter U-förmig ausgebildet, wobei im Zentrum zwischen den seitlichen Schenkeln 14 und dem die seitlichen Schenkel 14 verbindenden Quersteg 15 ein Freiraum 12 vorgesehen ist. Dieser Freiraum 12 ist in der Übergabestellung des Halters 6 wenigstens teilweise, bei dem dargestellten und insoweit bevorzugten Stückgutkasten 1 vollständig, außen vor der Stückgutkammer 3 angeordnet. Der Freiraum 12 erfüllt in dieser Stellung des Halters 6 eine bedeutende Funktion für die Übergabe des Stückguts 4 an den Halter 6 und für die Übernahme von Stückgut 4 vom Halter 6.

In der Fig. 1C ist dargestellt, dass der Halter 6 und die Klappe 2 miteinander verbunden und gegeneinander verstellbar angeordnet sind. Während der Halter 6 über das Schienensystem 7 mit dem Stückgutkasten 1 verbunden ist, ist die Klappe 2 über ein Schwenkgelenk 16 zum Schwenken eines Verbindungsmittels 17 der Klappe 2 um eine bezogen auf den Stückgutkasten 1 ortsfest angeordnete Schwenkachse 18 mit dem Stückgutkasten 1 verbunden. Die Verbindung der Klappe 2 und des Halters 6 ist beim dargestellten und insoweit bevorzugten Stückgutkasten 1 über einen Schwenkbeschlag 19 realisiert. Dieser Schwenkbeschlag 19 bildet dabei zwischen der Klappe 2 und dem Halter 6 eine Viergelenkkette 20 aus, so dass die Klappe 2 gegenüber dem Halter 6 schwenkbar ausgebildet ist. Zudem ist die Klappe 6 infolge des mit dem Halter 6 gekoppelten Schienensystems 7 auch verschiebbar, nämlich zusammen mit dem Halter 6.

Da die Verbindung zwischen dem Halter 6 und der zugehörigen Klappe 2 dauerhaft ausgebildet ist, wird eine zwangsweise Kopplung zwischen dem Halter 6 einerseits und der zugehörigen Klappe 2 andererseits derart bewirkt, dass das Verstellen des Halters 6 von der im Stückgutkasten 1 aufgenommenen Lagerstellung in die wenigstens teilweise außerhalb der Stückgutkammer 3 bzw. des Stückgutkastens 1 und vor der zugehörigen Klappe 2 in der geschlossenen Stellung angeordnete Übergabestellung zwangsweise mit einem Schwenken der Klappe 2 von der die Zugangsöffnung 5 zur Stückgutkammer 3 verschießende geschlossenen Stellung in die die Zugangsöffnung 5 zur Stückgutkammer 3 freigebende geöffnete Stellung einhergeht. In analoger Weise geht das Verstellen des Halters 6 aus der Übergabestellung zurück in die Lagerstellung zwangsweise einher mit dem Schwenken der Klappe 2 aus der geöffneten Stellung zurück in die geschlossene Stellung. Das Verstellen des Halters 6 ist vorliegend insbesondere ein Verschieben in Längsrichtung des wenigstens einen Schienensystems 7. Das Schienensystem 7 kann wenigstens eine Schiene 21 des Halters 6 und wenigstens eine Schiene 22 des Stückgutkastens 1 umfassen, die gegeneinander ausziehbar und wieder einschiebbar miteinander verbunden sind.

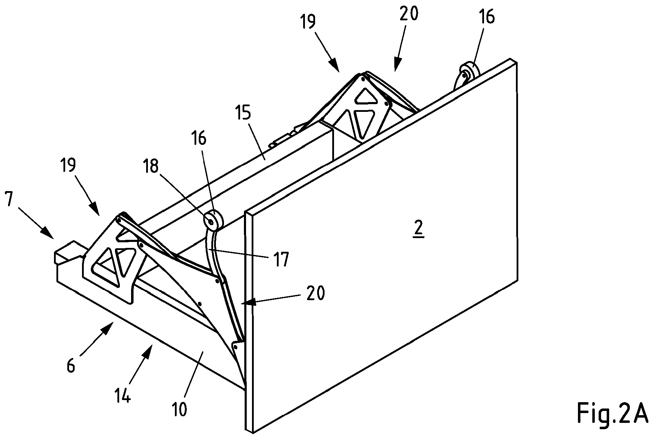

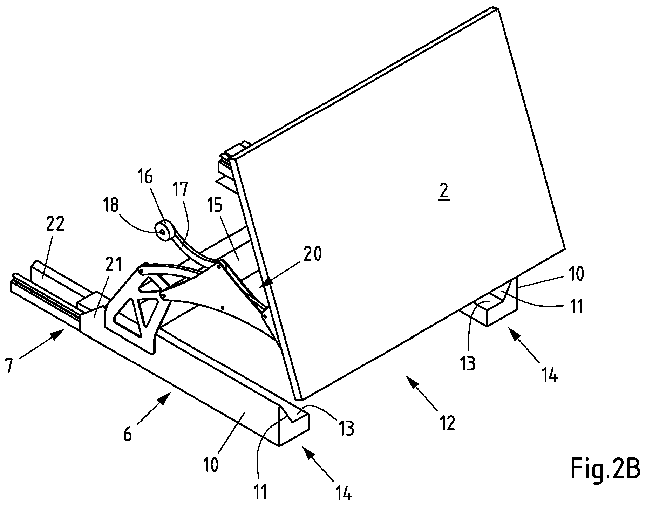

In den Fig. 2A-D sind ein Schienensystem 7, der Halter 6, die Klappe 2 und die Verbindung zwischen dem Halter 6 und der Klappe 2 einer Stückgutkammer 3 der besseren Übersichtlichkeit halber separat dargestellt. In der Fig. 2A ist der Halter 6 in der im Stückgutkasten 1 angeordneten Lagerstellung dargestellt. In dieser Lagerstellung des Halters 6 ist die Klappe 2 in der geschlossenen Stellung angeordnet. Wird nun der Halter 6 entlang des Schienensystems 7 nach vorne verschoben, schwenkt die Klappe 2 nach oben und vorne, um die Zugangsöffnung 5 der Stückgutkammer 3 zunächst für den Halter 6 freizugeben, der sich infolgedessen durch die Zugangsöffnung 5 wenigstens teilweise nach außen schieben kann, wie dies in der Fig. 2B dargestellt ist. Gekoppelt mit dieser Bewegung des Halters 6 schwenkt die Klappe 2 weiter nach oben und nach vorne, wobei die Verstellbewegung der Klappe 2 über die Viergelenkkette 20 in der Verbindung zwischen der Klappe 2 und dem Halter 6 präzise an die Verstellbewegung des Halters 6 angepasst ist. Dabei ist die Klappe 2 über den Schwenkbeschlag 19 und das Schwenkgelenk 16 an der ortsfesten Schwenkachse 18 festgelegt. Zudem ist bei dem dargestellten und insoweit bevorzugten Stückgutkasten 1 das Schienensystem 7 zum Verschieben des Halters 6 mit einer ortsfest am Stückgutkasten 1 festgelegten Schiene 22 und einer dagegen verschiebbar und ortsfest mit dem Halter 6 vorgesehenen Schiene 21 ausgerüstet.

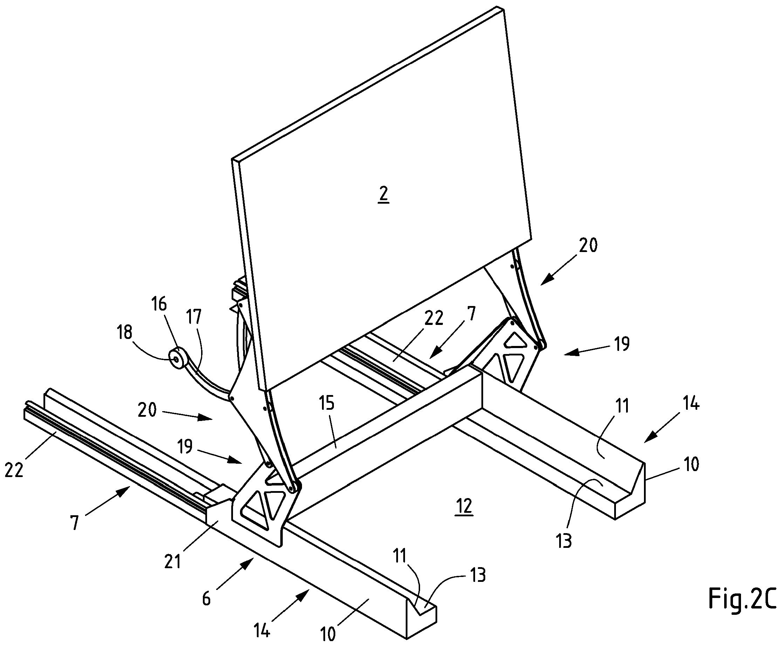

In der Fig. 2C ist der Halter 6 vollständig ausgefahren und in der Übergabestellung angeordnet. Des Weiteren ist die Klappe 2 ganz nach oben geschwenkt und etwa über dem hinteren Ende des Halters 2 bzw. nahe der Vorderseite des Stückgutkastens 1 angeordnet. Daher ist der Halter 6 in hohem Maße zugänglich für eine Übergabeeinrichtung 9 zum Übergeben oder Übernehmen von wenigstens einem Stückgut 4.

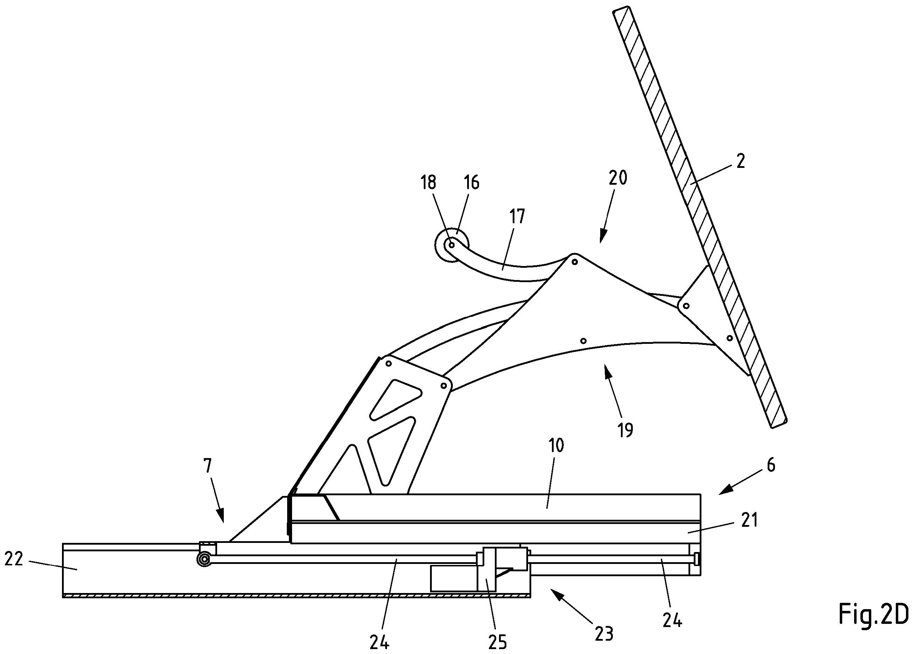

In der Fig. 2D ist der Antrieb zum Antrieb 23 des Schienensystems 7 dargestellt. Dabei kann jeder Seite des Halters 6 ein Antrieb 23 zugeordnet sein. Aus Kostengründen ist bei dem dargestellten und insoweit bevorzugten Stückgutkasten 1 nur ein Antrieb 23 pro Halter 6 vorgesehen. Der dargestellte und insoweit bevorzugte Antrieb 23 ist als Linearantrieb in Form eines Spindelantriebs dargestellt, bei dem eine Gewindestange 24 gegenüber einem Antriebsgehäuse 25 aus- und wieder eingefahren bzw. in Längsrichtung des Schienensystems 7 hin und her verfahren werden kann. Wird die Gewindestange 24 in der Fig. 2D nach rechts verstellt, wird der Halter 6 nach außen in die Übergabestellung verschoben, während der Halter 6 zurück nach innen in die Lagerstellung verschoben wird, wenn die Gewindestange 24 nach links verschoben wird. In der Stellung gemäß Fig. 2D befindet sich der Halter 6 zwischen der Lagerstellung und der Übergabestellung.

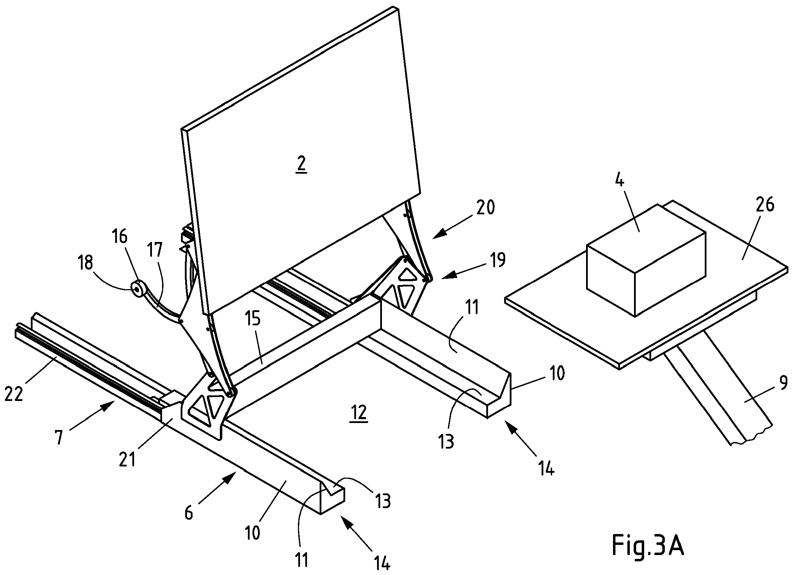

Das Verfahren zum Übergeben und/oder Übernehmen von Stückgut 4, insbesondere in Form von Sendungen, kann anhand der Fig. 3A-C erläutert werden, in denen der Halter 6 jeweils in der Übergabestellung angeordnet ist und der Halter 6 einen Freiraum 12 zwischen Haltebereichen 10 bildet, der wenigstens im Wesentlichen außerhalb der Stückgutkammer 3 angeordnet ist. Dies ist für das Zusammenspiel des Halters 6 mit einer geeigneten Übergabeeinrichtung 9 von Bedeutung.

Der in der Fig. 3A dargestellte und insoweit bevorzugte Halter 6 ist U-förmig ausgebildet und weist zwei seitliche Haltebereiche 10 auf, die durch die seitlichen Schenkel 14 des Halters 6 gebildet werden, die ihrerseits über einen hinteren Quersteg 15 miteinander verbunden sind. Damit bildet der dargestellte und insoweit bevorzugte Halter 6 in seinem Zentrum den Freiraum 12 aus. Des Weiteren ist der Halter 6 soweit aus der Stückgutkammer 3 und/oder dem Stückgutkasten 1 herausgeschoben, dass der Freiraum 12 wenigstens teilweise, insbesondere vollständig, vor der Stückgutkammer 3 und/oder dem Stückgutkasten 1 angeordnet ist. Zudem ist die in der geöffneten Stellung positionierte Klappe 2 horizontal in Richtung des Querstegs 15 bzw. des Stückgutkastens 1 gesehen wenigstens teilweise, insbesondere vollständig hinter dem Freiraum 12 angeordnet. Somit ist der Freiraum 12 des Halters 6 für die Übergabeeinrichtung 9 zum Übergeben von Stückgut 4 zugänglich.

Bei dem dargestellten und insoweit bevorzugten Verfahren trägt die Übergabeeinrichtung 9 ein, vorzugsweise standardisiertes Tablett 26, auf dem sich Stückgut 4 befindet, die infolge der Verwendung des Tabletts 26 sehr unterschiedliche Abmessungen aufweisen kann. Die Übergabeeinrichtung 9, die bei dem dargestellten und insoweit bevorzugten Verfahren nach Art eines Arms ausgebildet ist, bewegt sich von oben nach unten durch den vom Halter 6 definierten Freiraum 12. Dies kann wenigstens im Wesentlichen in vertikaler Richtung erfolgen. Zwingend ist dies jedoch nicht.

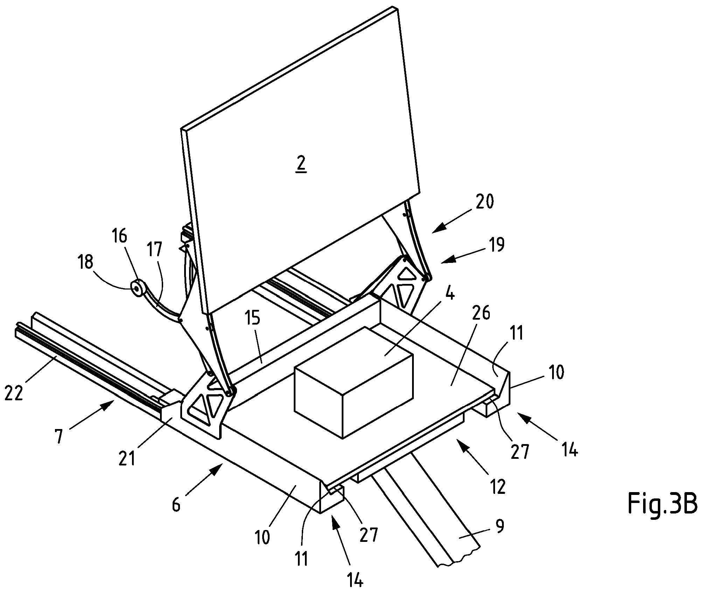

Auf diese Weise wird die in der Fig. 3B dargestellte Stellung 4 erreicht, in der das Tablett 26 auf dem Halter 6 aufliegt, gleichwohl aber noch von der Übergabeeinrichtung 9 getragen wird. Im Wege der Annäherung des Tabletts 26 an diese Stellung kann dann das Tablett 26, jedenfalls für den Fall, dass das Tablett 26 etwas ungenau in Bezug auf den Halter 6 ausgerichtet sein sollte, zunächst an wenigstens einer der Abschrägungen 11 anliegen und sodann in Richtung der Schwerkraft wenigstens abschnittsweise an der wenigstens einen Abschrägung 11 herabrutschen. Sodann kommt das Tablett 26 im dargestellten und insoweit bevorzugten Beispiel auf Tragstrukturen 13 zum Liegen, die sich in Richtung des Freiraums 12 an die Abschrägungen 11 anschließen. So wird eine breite Auflagefläche 27 zwischen dem Tablett 26 und dem Halter 6 bereitgestellt. Zudem wird infolge der Abschrägungen 11 eine Positionierung und/oder Zentrierung des Tabletts 26 und/oder dem Stückgut 4 erreicht.

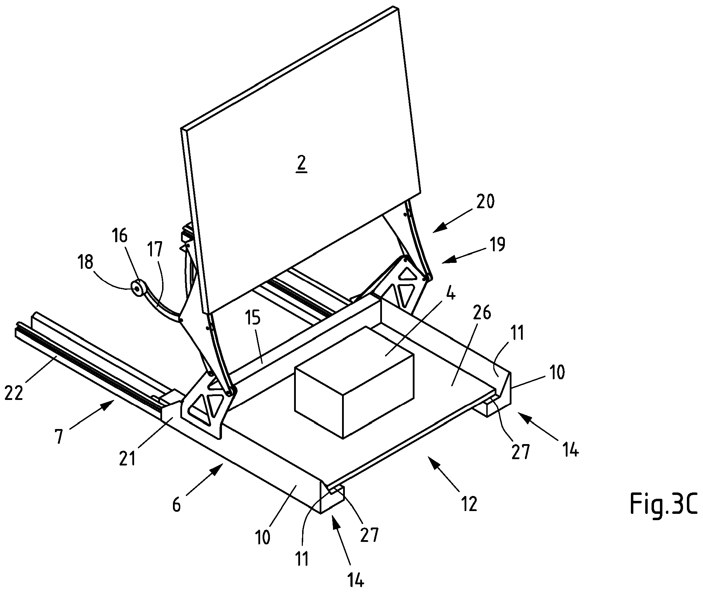

Die Übergabeeinrichtung 9 wird im Folgenden, wie dies in der Fig. 3C dargestellt ist, weiter nach unten und weg vom Halter 6 bewegt, wobei jedoch das Tablett 26 weiter auf dem Halter 6 gehalten wird, und zwar formschlüssig in der Schwerkraftrichtung. Infolge der Abstimmung des Tabletts 26 auf den Halter 6, kann auf dem Tablett 26 wahlweise ein Stückgut 4 oder aber mehrere Stückgüter 4 angeordnet sein. Auch sind sehr unterschiedliche Abmessungen von Stückgütern 4 möglich, wobei das Stückgut 4 vorzugsweise schmaler und kürzer als das Tablett 26 ist. Um das Stückgut 4 in die dem Halter 6 zugeordnete Stückgutkammer 3 zu verbringen, wird der Halter 6 zurück in die Lagerstellung in den Stückgutkasten 1 verschoben.

Um das Stückgut 4 an eine Übergabeeinrichtung 9 und damit an ein Fahrzeug 8 abzugeben, kann der Halter 6 erneut aus der Lagerstellung, in der die Klappe 2 die Zugangsöffnung 5 der Stückgutkammer 3 verschließt, in die Übergabestellung verstellt werden, in der die Klappe 2 in der geöffneten Stellung angeordnet ist und die Zugangsöffnung 5 der Stückgutkammer 3 freigibt. Dies ist in der Fig. 3C dargestellt. Dann kann eine Übergabeeinrichtung 9 von unten nach durch den Freiraum 12 des Halters 6 bewegt, insbesondere geschwenkt, werden, wobei sich die Stellung gemäß Fig. 3B einstellt. Die Übergabeeinrichtung 9 greift unter das Tablett 26, wobei das Tablett 26 aber noch auf dem Halter 6 aufliegt. Wenn die Übergabeeinrichtung 9 weiter nach oben bewegt wird, hebt die Übergabeeinrichtung 9 das Tablett 26 samt Stückgut 4 vom Halter 6. Die Übergabeeinrichtung 9 kann das Tablett 26 samt Stückgut 4 dann bedarfsweise in ein Fahrzeug 8 befördern. Der Halter 6 bleibt in der in der Fig. 3A dargestellten Übergabestellung ohne Tablett 26 und ohne Stückgut 4 zurück. Der Halter 6 kann anschließend zurück in die Lagerstellung verschoben werden und dort verharren, bis erneut Stückgut 4 an die zugehörige Stückgutkammer 3 übergeben werden soll, sei es mit Tablett 26 oder ohne.

Nicht im Einzelnen dargestellt ist, dass anstelle eines Tabletts 26 ebenso ein Behälter verwendet werden kann, wobei dann das wenigstens eine Stückgut 4 in dem Behälter angeordnet ist. Das Stückgut 4 kann dann nicht so einfach vom Tablett 26 rutschen. Da sich ansonsten an dem Verfahren nichts grundsätzlich verändern muss und sich der Fachmann anstelle des Tabletts 26 einen Behälter mit Stückgut 4 vorstellen kann, dessen Grundfläche bzw. der Boden wenigstens im Wesentlichen dieselben Abmessungen in der Ebene des Halters 6 aufweisen kann, erscheint eine separate Darstellung des Behälters entbehrlich.

Es kann auch gänzlich auf ein Tablett 26 oder einen Behälter verzichtet und lediglich die Sendung 4 als solche an den Halter 6 übergeben werden. Dies kommt insbesondere dann in Frage, wenn die Abmessungen des Stückguts 4 an den Halter 6 und an den jeweiligen Freiraum 12 angepasst sind. Das Stückgut 4 sollte beispielsweise breiter als der Freiraum 12 und schmaler als der Halter 6 ausgebildet sein. Für Stückgut 4, bei dem dies nicht der Fall ist, kann, wie beschrieben, bedarfsweise zusätzlich ein Tablett 26 oder ein Behälter verwendet werden.

### Bezugszeichenliste

- 1: Stückgutkasten
- 2: Klappe
- 3: Stückgutkammer
- 4: Stückgut
- 5: Zugangsöffnung
- 6: Halter
- 7: Schienensystem
- 8: Fahrzeug
- 9: Übergabeeinrichtung
- 10: Haltebereich
- 11: Abschrägung
- 12: Freiraum
- 13: Tragstruktur
- 14: Schenkel
- 15: Quersteg
- 16: Schwenkgelenk
- 17: Verbindungsmittel
- 18: Schwenkachse
- 19: Schwenkbeschlag
- 20: Viergelenkkette
- 21,22: Schiene
- 23: Antrieb
- 24: Gewindestange
- 25: Antriebsgehäuse
- 26: Tablett
- 27: Auflagefläche

## Patentansprüche

1. Stückgutkasten (1) mit wenigstens einer Stückgutkammer (3) zur Aufnahme wenigstens eines Stückguts (4), wobei der wenigstens einen Stückgutkammer (3) wenigstens ein von einer Lagerstellung zum Lagern des wenigstens einen Stückguts (4) in der Stückgutkammer (3) in eine wenigstens teilweise außerhalb der Stückgutkammer (3) angeordneter Übergabestellung zum Übergeben des Stückguts (4) von dem Stückgutkasten (1) und/oder an den Stückgutkasten (1) verstellbarer Halter (6) zugeordnet ist, wobei der Halter (6) wenigstens in der Übergabestellung zwei, insbesondere seitliche, Halterbereiche (10) zum wenigstens indirekten Halten des wenigstens einen Stückguts (4) wenigstens in der Übergabestellung aufweist, in der Übergabestellung zwischen den Haltebereichen (10) des wenigstens einen Halters (6) wenigstens ein in horizontaler Richtung von außerhalb der Stückgutkammer (3) zugänglicher und außerhalb der Stückgutkammer (3) angeordneter Freiraum (12) vorgesehen ist, wobei die Stückgutkammer (3) in der Lagerstellung des Halters (6) eine durch eine Klappe (2) verschlossene Zugangsöffnung (5) aufweist, wobei die Klappe (2) in der Übergabestellung die Zugangsöffnung (5) freigibt, wobei der Halter (6) wenigstens teilweise durch die Zugangsöffnung (5) hindurch verschiebbar vorgesehen ist und wobei die Klappe (2) schwenkbar am Stückgutkasten (1) gehalten ist,
**dadurch gekennzeichnet, dass**
die Klappe (2) mit dem Halter (6) schwenkbar verbunden ist, dass die Klappe (2) durch das Verstellen des Halters (6) von der Lagerstellung in die Übernahmestellung die Klappe (2) nach vorne oben in die geöffnete Stellung und durch das Verstellen des Halters (6) von der Übernahmestellung in die Lagerstellung die Klappe (2) nach hinten unten in die geschlossene Stellung schwenkbar ist, dass der obere Rand der Klappe (2) in der geschlossenen Stellung dem oberen Rand der Klappe (2) in der geöffneten Stellung entspricht, so dass die Vorderseite der Klappe (2) sowohl in der geschlossenen Stellung als auch in der geöffneten Stellung nach vorne weist und dass die Klappe (2) in der geöffneten Stellung horizontal in Richtung des Stückgutkastens (1) gesehen hinter dem Freiraum (12) angeordnet ist.

2. Stückgutkasten nach Anspruch 1,
**dadurch gekennzeichnet, dass**
der wenigstens eine Freiraum an einer Vorderseite des Stückgutkastens vorgesehen und/oder von einem Raum angrenzend zur Vorderseite des Stückgutkastens in horizontaler Richtung zugänglich ist.

3. Stückgutkasten nach Anspruch 1 oder 2,
**dadurch gekennzeichnet, dass**
der Halter (6) wenigstens in der Übergabestellung U-förmig ausgebildet ist und/oder dass die äußeren Schenkel (14), insbesondere seitliche, Haltebereiche (10) und/oder der die äußeren Schenkel (14) verbindende Quersteg (15) des Halters (6) einen, insbesondere hinteren, Haltebereich (10) bilden.

4. Stückgutkasten nach einem der Ansprüche 1 bis 3,
**dadurch gekennzeichnet, dass**
der Halter (6) über wenigstens ein Schienensystem (7) von der Lagerstellung in die Übergabestellung und/oder von der Übergabestellung in die Lagerstellung verschiebbar mit dem Stückgutkasten (1) verbunden ist und/oder dass der Halter (6) von der Lagerstellung in die Übergabestellung und/oder von der Übergabestellung in die Lagerstellung wenigstens im Wesentlichen horizontal verschiebbar vorgesehen ist.

5. Stückgutkasten nach einem der Ansprüche 1 bis 4,
**dadurch gekennzeichnet, dass**
der Halter (6) wenigstens in der Übergabestellung wenigstens im Wesentlichen horizontal ausgerichtet ist und/oder dass der Halter (6) wenigstens eine zum Freiraum (12) hin abfallende Abschrägung (11) und, vorzugsweise, zwischen dem Freiraum (12) und der wenigstens einen Abschrägung (11) sowie unterhalb der wenigstens einen Abschrägung (11) eine Tragstruktur (13) zum Tragen des wenigstens einen Stückguts (4) aufweist.

6. Stückgutkasten nach einem der Ansprüche 1 bis 5,
**dadurch gekennzeichnet, dass**
das wenigstens eine Stückgut (4) von wenigstens einem Tablett (26) und/oder Behälter und das wenigstens eine Tablett (26) und/oder der wenigstens eine Behälter (26) in Schwerkraftrichtung formschlüssig vom Halter (6), insbesondere der Abschrägung (11) und/oder der Tragstruktur (13), getragen ist und dass, vorzugsweise, das Tablett (26) und/oder der Behälter lösbar und/oder in wenigstens einer horizontalen Richtung, formschlüssig mit dem Halter (6), insbesondere der Abschrägung (11) und/oder der Tragstruktur (13), verbunden ist.

7. Stückgutkasten nach einem der Ansprüche 1 bis 6,
**dadurch gekennzeichnet, dass**
dem wenigstens einen Halter (6) und/oder dem wenigstens einen Schienensystem (7) ein Antrieb (23), insbesondere Spindelantrieb oder Linearantrieb, zum Verstellen des Halters (6) von der Lagerstellung in die Übergabestellung und/oder von der Übergabestellung in die Lagerstellung zugeordnet ist und/oder dass der wenigstens einen Klappe (2) ein Antrieb (23), insbesondere Spindelantrieb oder Linearantrieb, zum Verstellen der wenigstens einen Klappe (2) von der geschlossenen Stellung in die geöffnete Stellung und/oder von der geöffneten Stellung in die geschlossene Stellung zugeordnet ist.

8. Verfahren zur Übergabe und Lagerung von Stückgut (4) in einem Stückgutkasten, nach einem der Ansprüche 1 bis 7,
bei dem wenigstens ein wenigstens einer Stückgutkammer (3) zugeordneter Halter (6) von einer Lagerstellung zum Lagern wenigstens eines Stückguts (4) in der Stückgutkammer (3) in eine wenigstens teilweise außerhalb der Stückgutkammer (3) angeordnete Übergabestellung zum Übergeben des wenigstens einen Stückguts (4) von dem Stückgutkasten (1) und/oder an den Stückgutkasten (1) verstellt wird,
bei dem in der Übergabestellung des Halters (6) wenigstens eine Übergabeeinrichtung von außerhalb der wenigstens einen Stückgutkammer (3) wenigstens teilweise durch einen Freiraum (12) zwischen zwei, insbesondere seitlichen, Halterbereichen (10) des Halters (6) zum wenigstens indirekten Halten des wenigstens einen Stückguts (4), vorzugsweise in einer wenigstens überwiegend vertikalen Bewegung, hindurchbewegt wird,
bei dem beim Hindurchbewegen der Übergabeeinrichtung (9) durch den Freiraum (12) des Halters (6) wenigstens ein Stückgut (4) an den Halter (6) in der Übergabestellung übergeben und/oder wenigstens ein Stückgut (4) von dem Halter (6) in der Übergabestellung übernommen wird,
bei dem mit dem Verstellen des Halters (6) von der Lagerstellung in die Übergabestellung zwangsweise wenigstens eine Klappe (2) von einer eine Zugangsöffnung (5) der Stückgutkammer (3) verschließenden geschlossenen Stellung in eine die Zugangsöffnung (5) freigebende geöffnete Stellung geschwenkt wird und
bei dem mit dem Verstellen des Halters (6) von der Übergabestellung in die Lagerstellung zwangsweise wenigstens eine Klappe (2) von einer die Zugangsöffnung (5) der Stückgutkammer (3) freigebenden geöffneten Stellung in eine die Zugangsöffnung (5) verschließende geschlossene Stellung geschwenkt wird.

9. Verfahren nach Anspruch 8,
bei dem der wenigstens eine Halter (6) über einen Antrieb zum Verstellen des Halters (6) von der Lagerstellung in die Übergabestellung und/oder von der Übergabestellung in die Lagerstellung angetrieben wird und/oder
bei dem die wenigstens eine Klappe (2) über einen Antrieb (23) zum Verstellen der Klappe (2) von der geschlossenen Stellung in die geöffnete Stellung und/oder von der geöffneten Stellung in die geschlossene Stellung angetrieben wird.

10. Verfahren nach einem der Ansprüche 8 oder 9,
bei dem der wenigstens eine Halter (6) über ein Schienensystem (7), insbesondere wenigstens im Wesentlichen horizontal, von der Lagerstellung, insbesondere wenigstens teilweise aus der Stückgutkammer (3), in die Übergabestellung ausgezogen wird und/oder
bei dem der wenigstens eine Halter (6) über ein Schienensystem (7), insbesondere wenigstens im Wesentlichen horizontal, von der Übergabestellung in die Lagerstellung, insbesondere wenigstens teilweise in die Stückgutkammer (3), eingeschoben wird.

11. Verfahren nach einem der Ansprüche 8 bis 10,
bei dem das wenigstens eine Stückgut (4), wenigstens ein wenigstens ein Stückgut (4) tragendes Tablett (26) und/oder wenigstens ein wenigstens ein Stückgut (4) aufweisender Behälter von der wenigstens einen Übergabeeinrichtung (9) an den wenigstens einen Halter (6) übergeben wird und/oder bei dem das wenigstens eine Stückgut (4) wenigstens ein wenigstens ein Stückgut (4) tragendes Tablett (26) und/oder wenigstens ein das wenigstens eine Stückgut (4) aufweisender Behälter von der wenigstens einen Übergabeeinrichtung (9) von dem wenigstens einen Halter (6) übernommen wird.

12. Verfahren nach einem der Ansprüche 8 bis 11,
bei dem das wenigstens eine Stückgut (4), wenigstens ein wenigstens ein Stückgut (4) tragendes Tablett (26) und/oder wenigstens ein wenigstens ein Stückgut (4) aufweisender Behälter von der wenigstens einen Übergabeeinrichtung (9) auf wenigstens einer Abschrägung (11) des Halters (6) abgestellt wird und
bei dem, vorzugsweise, das wenigstens eine Stückgut (4), wenigstens ein wenigstens ein Stückgut (4) tragendes Tablett (16) und/oder wenigstens ein wenigstens ein Stückgut (4) aufweisender Behälter unter Positionierung, insbesondere Zentrierung, auf dem Halter wenigstens teilweise selbständig an der wenigstens einen Abschrägung (11) abrutscht.

## Claims

1. General cargo box (1) with at least one general cargo chamber (3) for receiving at least one general cargo (4), wherein the at least one general cargo chamber (3) is assigned at least one holder (6), which can be adjusted from a storage position for storing the at least one general cargo (4) in the general cargo chamber (3) to a transfer position, which is arranged at least partially outside of the general cargo chamber (3) and is used for transferring the general cargo (4) from the general cargo box (1) and/or to the general cargo box (1), wherein the holder (6) has, at least in the transfer position, two, in particular lateral, holding areas (10) for at least indirectly holding the at least one general cargo (4) at least in the transfer position, in the transfer position between the holding areas (10) of the at least one holder (6) is provided at least one free space (12) accessible in a horizontal direction from outside the general cargo chamber (3) and arranged outside of the general cargo chamber (3), wherein the general cargo chamber (3) in the storage position of the holder (6) has an access opening (5) sealed by a hatch (2), wherein the hatch (2), in the transfer position, releases the access opening (5), wherein the holder (6) is provided so as to be displaceable at least partially through the access opening (5) and wherein the hatch (2) is held pivotably on the general cargo box (1), **characterised in that** the hatch (2) is pivotably connected to the holder (6), **in that** the hatch (2) can be pivoted forwards and upwards to the open position by adjusting the holder (6) from the storage position to the pick-up position and by adjusting the holder (6) from the pick-up position to the storage position, the hatch (2) can be pivoted backwards and downwards to the closed position, **in that** the upper edge of the hatch (2) in the closed position corresponds to the upper edge of the hatch (2) in the open position such that the front side of the hatch (2) points forwards both in the closed position and in the open position and that the hatch (2), in the open position, is arranged behind the free space (12), viewed horizontally in the direction of the general cargo box (1).

2. General cargo box according to claim 1, **characterised in that** the at least one free space is provided on a front side of the general cargo box and/or is accessible in a horizontal direction from a space adjoining the front side of the general cargo box.

3. General cargo box according to claim 1 or 2, **characterised in that** the holder (6) is designed to be U-shaped at least in the transfer position and/or **in that** the outer legs (14), in particular lateral, holding areas (10) and/or the transverse web (15) of the holder (6) connecting the outer legs (14) form an, in particular rear, holding area (10).

4. General cargo box according to any one of claims 1 to 3, **characterised in that** the holder (6) is connected to the general cargo box (1) via at least one rail system (7) so as to be displaceable from the storage position to the transfer position and/or from the transfer position to the storage position and/or **in that** the holder (6) is provided so as to be displaceable at least substantially horizontally from the storage position to the transfer position and/or from the transfer position to the storage position.

5. General cargo box according to any one of claims 1 to 4, **characterised in that** the holder (6) is aligned at least substantially horizontally at least in the transfer position and/or **in that** the holder (6) has at least one bevel (11) sloping towards the free space (12) and, preferably, between the free space (12) and the at least one bevel (11) and below the at least one bevel (11) has a support structure (13) for carrying the at least one general cargo (4).

6. General cargo box according to any one of claims 1 to 5, **characterised in that** the at least one general cargo (4) is carried by at least one tray (26) and/or container and the at least one tray (26) and/or the at least one container (26) is carried in the direction of gravity in a positive-locking manner by the holder (6), in particular the bevel (11) and/or the support structure (13), and **in that**, preferably, the tray (26) and/or the container is detachably connected and/or, in at least one horizontal direction, is connected in a positive-locking manner to the holder (6), in particular the bevel (11) and/or the support structure (13).

7. General cargo box according to any one of claims 1 to 6, **characterised in that** a drive (23), in particular a spindle drive or linear drive, for adjusting the holder (6) from the storage position to the transfer position and/or from the transfer position to the storage position is assigned to the at least one holder (6) and/or to the at least one rail system (7) and/or **in that** a drive (23), in particular a spindle drive or linear drive, for adjusting the at least one hatch (2) from the closed position to the open position and/or from the open position to the closed position is assigned to the at least one hatch (2).

8. Method for transferring and storing general cargo (4) in a general cargo box according to any one of claims 1 to 7, in which at least one holder (6) assigned to at least one general cargo chamber (3) is adjusted from a storage position for storing at least one general cargo (4) in the general cargo chamber (3) to a transfer position, which is arranged at least partially outside of the general cargo chamber (3) and is used for transferring the at least one general cargo (4) from the general cargo box (1) and/or to the general cargo box (1), in which, in the transfer position of the holder (6), at least one transfer device is moved, preferably in an at least predominately vertical movement, from outside of the at least one general cargo chamber (3) at least partially through a free space (12) between two, in particular lateral, holding areas (10) of the holder (6) for at least indirectly holding the at least one general cargo (4), in which during the movement of the transfer device (9) through the free space (12) of the holder (6) at least one general cargo (4) is transferred to the holder (6) in the transfer position and/or at least one general cargo (4) is picked up by the holder (6) in the transfer position, in which, by adjusting the holder (6) from the storage position to the transfer position, at least one hatch (2) is forcibly pivoted from a closed position sealing an access opening (5) of the general cargo chamber (3) to an open position releasing the access opening (5) and in which, by adjusting the holder (6) from the transfer position to the storage position, at least one hatch (2) is forcibly pivoted from an open position releasing the access opening (5) of the general cargo chamber (3) to a closed position sealing the access opening (5).

9. Method according to claim 8, in which the at least one holder (6) is driven via a drive for adjusting the holder (6) from the storage position to the transfer position and/or from the transfer position to the storage position and/or in which the at least one hatch (2) is driven via a drive (23) for adjusting the hatch (2) from the closed position to the open position and/or from the open position to the closed position.

10. Method according to any one of claims 8 or 9, in which the at least one holder (6) is pulled out via a rail system (7), in particular at least substantially horizontally, from the storage position, in particular at least partially from the general cargo chamber (3), into the transfer position and/or in which the at least one holder (6) is pushed into the storage position, in particular at least partially into the general cargo chamber (3), via a rail system (7), in particular at least substantially horizontally, from the transfer position.

11. Method according to any one of claims 8 to 10, in which the at least one general cargo (4), at least one tray (26) carrying at least one general cargo (4) and/or at least one container comprising at least one general cargo (4) is transferred from the at least one transfer device (9) to the at least one holder (6) and/or in which the at least one general cargo (4), at least one tray (26) carrying at least one general cargo (4) and/or at least one container comprising the at least one general cargo (4) is picked up by the at least one transfer device (9) from the at least one holder (6).

12. Method according to any one of claims 8 to 11, in which the at least one general cargo (4), at least one tray (26) carrying at least one general cargo (4) and/or at least one container comprising at least one general cargo (4) is placed by the at least one transfer device (9) on at least one bevel (11) of the holder (6) and in which, preferably, the at least one general cargo (4), at least one tray (16) carrying at least one general cargo (4) and/or at least one container comprising at least one general cargo (4), through positioning, in particular centring, on the holder at least partially automatically slides off the at least one bevel (11).

## Revendications

1. Caisse pour marchandise de détail (1) avec au moins une chambre pour marchandise de détail (3) destinée à recevoir au moins une marchandise de détail (4), un support (6), pouvant être déplacé d'une position de stockage, pour le stockage de ladite au moins une marchandise de détail (4) dans la chambre pour marchandise de détail (3), à une position de transfert, agencée au moins partiellement à l'extérieur de la chambre pour marchandise de détail (3), pour le transfert de la marchandise de détail (4) de la caisse pour marchandise de détail (1) et/ou vers la caisse pour marchandise de détail (1), étant associé à ladite au moins une chambre pour marchandise de détail (3), le support (6) présentant au moins, dans la position de transfert, deux zones de support (10), notamment latérales, pour au moins le support indirect de ladite au moins une marchandise de détail (4) au moins dans la position de transfert, un espace libre (12), accessible dans la direction horizontale depuis l'extérieur de la chambre pour marchandise de détail (3) et agencé à l'extérieur de la chambre pour marchandise de détail (3) dans la position de transfert, étant prévu entre les zones de support (10) dudit au moins un support (6), la chambre pour marchandise de détail (3) présentant, dans la position de stockage du support (6), une ouverture d'accès (5) fermée par un volet (2), le volet (2) libérant l'ouverture d'accès (5) dans la position de transfert, le support (6) étant prévu de manière à pouvoir être déplacé, au moins partiellement, à travers l'ouverture d'accès (5) et le volet (2) étant maintenu pivotant sur la caisse pour marchandise de détail (1), **caractérisée en ce que** le volet (2) est relié pivotant au support (6), **en ce que**, par le déplacement du support (6) de la position de stockage à la position de prise en charge, le volet (2) peut pivoter vers l'avant et vers le haut dans la position ouverte, et, par le déplacement du support (6) de la position de prise en charge à la position de stockage, le volet (2) peut pivoter vers l'arrière et vers le bas dans la position fermée, **en ce que** le bord supérieur du volet (2) dans la position fermée correspond au bord supérieur du volet (2) dans la position ouverte, de sorte que la face avant du volet (2) est dirigée vers l'avant tant dans la position fermée que dans la position ouverte, et **en ce que** le volet (2), dans la position ouverte, est agencé horizontalement derrière l'espace libre (12), vu en direction de la caisse pour marchandise de détail (1).

2. Caisse pour marchandise de détail selon la revendication 1, **caractérisée en ce que** l'on prévoit ledit au moins un espace libre sur une face avant de la caisse pour marchandise de détail et/ou est accessible dans une direction horizontale depuis un espace adjacent à la face avant de la caisse pour marchandise de détail.

3. Caisse pour marchandise de détail selon la revendication 1 ou 2, **caractérisée en ce que** le support (6) est conçu en forme de U au moins dans la position de transfert et/ou **en ce que** les branches extérieures (14) forment des, notamment latérales, zones de support (10) et/ou la traverse (15) du support (6) reliant les branches extérieures (14) forme une, notamment arrière, zone de support (10).

4. Caisse pour marchandise de détail selon l'une des revendications 1 à 3, **caractérisée en ce que** le support (6) est relié à la caisse pour marchandise de détail (1) par au moins un système à rails (7) de manière à pouvoir être déplacé de la position de stockage à la position de transfert et/ou de la position de transfert à la position de stockage et/ou **en ce que** l'on prévoit le support (6) déplaçable, au moins essentiellement horizontalement, de la position de stockage à la position de transfert et/ou de la position de transfert à la position de stockage.

5. Caisse pour marchandise de détail selon l'une des revendications 1 à 4, **caractérisée en ce que** le support (6) est orienté, au moins sensiblement horizontalement, au moins dans la position de transfert et/ou **en ce que** le support (6) présente au moins un chanfrein (11) descendant vers l'espace libre (12) et, de préférence, une structure porteuse (13) pour porter ladite au moins une marchandise de détail (4) entre l'espace libre (12) et ledit au moins un chanfrein (11) ainsi qu'en dessous dudit au moins un chanfrein (11).

6. Caisse pour marchandise de détail selon l'une des revendications 1 à 5, **caractérisée en ce que** ladite au moins une marchandise de détail (4) est portée par au moins un plateau (26) et/ou un récipient et ledit au moins un plateau (26) et/ou ledit au moins un récipient (26) est porté par le support (6), notamment le chanfrein (11) et/ou la structure porteuse (13), par complémentarité de forme dans le sens de la gravité et **en ce que**, de préférence, le plateau (26) et/ou le récipient est relié de manière amovible et/ou dans au moins une direction horizontale, par complémentarité de forme, au support (6), notamment au chanfrein (11) et/ou à la structure porteuse (13).

7. Caisse pour marchandises de détail selon l'une des revendications 1 à 6, **caractérisée en ce qu'**un entraînement (23), notamment un entraînement à broche ou un entraînement linéaire, est associé audit au moins un support (6) et/ou audit au moins un système à rails (7) pour déplacer le support (6) de la position de stockage à la position de transfert et/ou de la position de transfert à la position de stockage et/ou **en ce qu'**un entraînement (23), notamment un entraînement à broche ou un entraînement linéaire, est associé audit au moins un volet (2) pour déplacer ledit au moins un volet (2) de la position fermée à la position ouverte et/ou de la position ouverte à la position fermée.

8. Procédé de transfert et de stockage de marchandises de détail (4) dans une caisse pour marchandise de détail, selon l'une des revendications 1 à 7, dans lequel au moins un support (6) associé à au moins une chambre pour marchandise de détail (3) est déplacé d'une position de stockage, pour stocker au moins une marchandise de détail (4) dans la chambre pour marchandise de détail (3), dans une position de transfert agencée, au moins partiellement, à l'extérieur de la chambre pour marchandise de détail (3) pour transférer ladite au moins une marchandise de détail (4) de la caisse pour marchandise de détail (1) et/ou vers la caisse pour marchandise de détail (1), dans lequel, dans la position de transfert du support (6), au moins un dispositif de transfert traverse, au moins partiellement, depuis l'extérieur de ladite au moins une chambre pour marchandise de détail (3), un espace libre (12) entre deux zones de support (10) du support (6), notamment latérales, pour le support au moins indirect de ladite au moins une marchandise de détail (4), de préférence dans un mouvement au moins principalement vertical, dans lequel, lors du mouvement du dispositif de transfert (9) à travers l'espace libre (12) du support (6), au moins une marchandise de détail (4) est transférée au support (6) dans la position de transfert et/ou au moins une marchandise de détail (4) est prise en charge par le support (6) dans la position de transfert, dans lequel, lors du déplacement du support (6) de la position de stockage à la position de transfert, au moins un volet (2) est obligatoirement pivoté d'une position fermée, fermant une ouverture d'accès (5) de la chambre pour marchandise de détail (3), dans une position ouverte libérant l'ouverture d'accès (5) et dans lequel, lors du déplacement du support (6) de la position de transfert dans la position de stockage, au moins un volet (2) est obligatoirement pivoté d'une position ouverte libérant l'ouverture d'accès (5) de la chambre pour marchandise de détail (3) dans une position fermée fermant l'ouverture d'accès (5).

9. Procédé selon la revendication 8, dans lequel ledit au moins un support (6) est entraîné par un entraînement pour déplacer le support (6) de la position de stockage à la position de transfert et/ou de la position de transfert à la position de stockage et/ou dans lequel ledit au moins un volet (2) est entraîné par un entraînement (23) pour déplacer le volet (2) de la position fermée à la position ouverte et/ou de la position ouverte à la position fermée.

10. Procédé selon l'une des revendications 8 ou 9, dans lequel ledit au moins un support (6) est extrait, notamment au moins sensiblement horizontal, de la position de stockage, notamment au moins partiellement hors de la chambre pour marchandise de détail (3), vers la position de transfert par l'intermédiaire d'un système à rails (7) et/ou dans lequel ledit au moins un support (6) est inséré, notamment au moins sensiblement horizontal, de la position de transfert vers la position de stockage, notamment au moins partiellement dans la chambre pour marchandise de détail (3), par l'intermédiaire d'un système à rails (7).

11. Procédé selon l'une des revendications 8 à 10, dans lequel ladite au moins une marchandise de détail (4), au moins un plateau (26) portant au moins une marchandise de détail (4) et/ou au moins un récipient présentant au moins une marchandise de détail (4) est transféré dudit au moins un dispositif de transfert (9) audit au moins un support (6) et/ou dans lequel ladite au moins une marchandise de détail (4), au moins un plateau (26) portant au moins une marchandise de détail (4) et/ou au moins un récipient présentant ladite au moins une marchandise de détail (4) est prise en charge par ledit au moins un dispositif de transfert (9) dudit au moins un support (6).

12. Procédé selon l'une des revendications 8 à 11, dans lequel ladite au moins une marchandise de détail (4), au moins un plateau (26) portant au moins une marchandise de détail (4) et/ou au moins un récipient présentant au moins une marchandise de détail (4) est déposée par ledit au moins un dispositif de transfert (9) sur au moins un chanfrein (11) du support (6) et dans lequel, de préférence, ladite au moins une marchandise de détail (4), au moins un plateau (16) portant au moins une marchandise de détail (4) et/ou au moins un récipient présentant au moins une marchandise de détail (4) glisse, au moins partiellement de manière autonome, sur ledit au moins un chanfrein (11) en se positionnant, notamment en se centrant, sur le support.
